# EUROPEAN PATENT APPLICATION

(11) **EP 1 455 469 A1**
(43) Date of publication of application: **08.09.2004**
(21) Application number: 04075660.3
(22) Date of filing: 02.03.2004
(51) Int. Cl.: H04B 10/207, G02B 6/50

(54) **Telecommunication network in which glass fibre cable can be laid in stages, and method for its installation in stages**

(30) Priority: 04.03.2003 NL 1022836
(71) Applicant: Trilink B.V., 4101 BB Culemborg (NL)
(72) Inventor: Van Kampen, Anthonie, Ing., 3994 HT Houten (NL); Feiter, Eric Francais Joseph Marie, Drs., 3532 CJ Utrecht (NL)
(74) Representative: Lips, Hendrik Jan George, Ir.

(57) **Abstract**

The invention relates to a telecommunication network or part of a telecommunication network having a basic structure with copper wires extending from a distribution exchange to end-users associated with said distribution exchange, next to which a secondary structure for glass fibre strands is provided. The secondary structure is provided with protective tubes, conduits mounted within said protective tubes and first and second distribution points in such a way that the glass fibre strands per end-user can be installed in the secondary structure on any later point of time from a fixed distribution point.

## Description

The present invention relates to a telecommunication network or part of a telecommunication network having a basic structure with copper wires extending from a distribution exchange to the end-users associated with said distribution exchange.

With parts of a telecommunication network, such as e.g. a telephone network, that are to be newly installed, one usually departs from a network having copper wires. Although it may be expected that a glass fibre network for telephone and various types of data transport will be preferred in the future, at present a network completely based on glass fibre technique is no feasible option. The reason for this is that a number of facilities which are provided by the copper network, such as the continuous contactability of the alarm number 112 for example, have not yet been sufficiently developed technically for a glass fibre network. Additionally, a further complicating factor is that the owner of the present telephone network is as yet required to provide each individual household and/or building with a connection having copper wires.

The object of the invention is to provide a network in which it is possible to remove said problem. Accordingly, the invention provides for a network having a secondary structure for glass fibre strands in addition to the basic structure having copper wires, the secondary structure being designed in such a way, that the glass fibre strands for each end-user can be installed in the secondary structure from the distribution exchange or a further point of distribution between distribution exchange and end-user.

Therefore, it is proposed to install a secondary structure when installing new parts of the existing telecommunication network or when replacing existing parts of the network, said secondary structure being suitable for providing an individual end-user with a glass fibre connection at any desired later point in time.

According to a preferred embodiment is is further provided for that the secondary structure substantially comprises a protective tubing structure having successive protective tubing groups, with conduits for the glass fibre strands being applied within the protective tubes and individual conduits extending through one or more of the successive protective tubing groups up to the end-user.

The great advantage of such a structure is that the initial costs, which are mainly the costs for the protective tubing and the conduits, are extremely low and that in the long run it will be possible to establish a glass fibre connection at relatively low cost per individual end-user.

According to another elaboration it is further provided for, that first and second distribution points are provided between distribution exchange and end-user, with cables having copper wires and/or copper wires in conduits being provided in separate protective tubing groups and conduits for glass fibre strands also being provided in separate protective tubing groups being provided between first and second distribution points, and that from the second distribution points, conduits for copper wires and conduits for glass fibre strands combined in predetermined numbers are provided in protective tubes of a further protective tubing group.

In order to allow for such a combined telecommunication network having both copper wires and glass fibre strands, it is necessary that the network is adapted to the specific features of telephone and data communication over both copper wires and glass fibre strands. To this end, the indicated distribution with first and second distribution points is provided.

Here, the first distribution points are installed in an approximately star-shaped network around an exchange and the second distribution points are likewise installed in an approximately star-shaped network around the first distribution points. All end-users are within a predetermined maximum radius in relation to said first distribution points. Thus, the length of the glass fibre strands up to said first distribution points remains within a predetermined maximum so that signal transmission of a predetermined bandwidth can be guaranteed.

The copper wires extend from the exchange up to the end-user and in order to prevent losses or too much losses in the signal, a predetermined length must not be exceeded. The maximum length can be increased by application of amplifiers. Another technique is employed with glass fibre strands in which a combined signal is sent from the exchange to the first distribution points, where the incoming signal is split up by router units and are sent on to the various end-users as individual signals. Therefore, the successive distances between the exchange and first distribution points and between first distribution points and end-users remain within a range that can be bridged without problems by "multimode" laser technique, in which the signals are transmitted with the help of LEDs. Basically, it is also possible to bridge larger distances, however, then one should employ "single mode" laser technique, in which the signals are transmitted with the help of laser.

Said first distribution points are further arranged to split up the copper cable coming from said exchange into individual copper cables subsequently extending to the second distribution points. Said second distribution points are arranged to split up the copper wires coming from said first distribution points into copper wires extending to the invididual end-users. Said copper wires arrive at said second distribution points in cables, said cables being accommodated in protective tubing. However, it is also possible to split up the cables into cores or core pairs at an earlier stage and lead them to said second distribution point in conduits.

From said second distribution points, the copper wires are inserted into conduits in pairs, in which the conduits with glass fibre strands and the conduits with copper wires being combined in protective tubing are continued from said second distribution points. Further, it is provided for, that at least one conduit for copper wires and at least one conduit for glass fibre strands has been branched off from the further protective tubing group extending from a second distribution point to the individual end-users. The conduit for copper wires is provided with at least one pair of copper wires and the conduit for glass fibre strands is empty.

The secondary structure of the network is designed in such a way, that glass fibre strands can be led from said first distribution points to the individual end-users and that glass fibre strands can be led from said first distribution points to the associated exchange. In said first distribution points, further provisions are made for coupling the glass fibre strands coming from the exchange to the glass fibre strands extending to the individual end-users. To this end, e.g. router units are provided.

The invention also provides for a method for installing such a telecommunication network comprising at least the following steps:
- determining locations for first distribution points and installing first distribution points;
- determining locations for second distribution points and installing second distribution points;
- at the same time installing protective tubing groups for copper wires and glass fibre strands; and
- laying copper cables and wires.

According to a further elaboration, the method comprises the following additional steps:
- laying copper cables and first protective tubes intended for providing glass fibre strands therein, from an exchange to said first distribution points;
- laying protective tubes for cable with copper wires and protective tubes for glass fibre strands from said first distribution points to said second distribution points;
- providing conduits within the protective tubes for said glass fibre strands;
- laying protective tubes for combinations of copper wires and glass fibre strands from said second distribution points;
- providing conduits for the combinations of copper wires and glass fibre strands in said protective tubes;
- providing copper wires in the conduits concerned and coupling them to the copper wires ending at said second distribution point;
- coupling conduits for glass fibre strands to the conduits extending to said first distribution points; and
- providing branches in the protective tubes coming from said second distribution points extending to the end-users, in which each branch has at least one conduit having two or more copper wires and one conduit arranged for providing glass fibre strands therein.

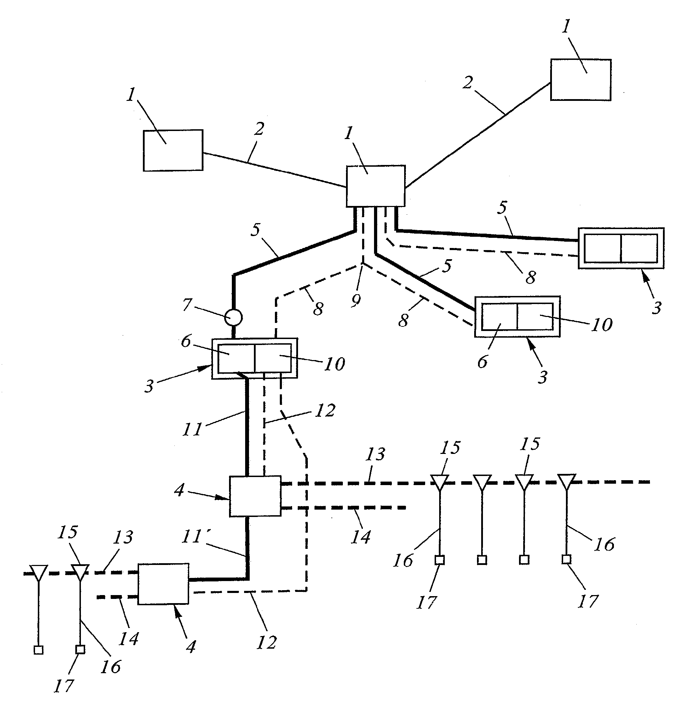

Hereinafter, the invention is further explained by way of the schematic example given in the drawing.

The drawing illustrates a telecommunication network having a main structure with number exchanges 1 interconnected through channels 2. The channels 2 can be in the form of e.g. cables having copper wires, beam transmitters, glass fibre connections or also communication satellites. The invention does not relate to this part of the network.

In a number exchange 1, the extensions of a large number of end-users are controlled (thousands of end-users). A star-shaped network having first distribution points 3 is provided from said exchange 1, in which each of said first distribution points 3 has a branch having second distribution points 4 in a further star-shaped network.

A cable 5 having copper wires extends from said exchange 1 to a connecting field 6 for copper wires provided in a first distribution point 5. In order to be able to work conveniently in a connecting field 6, immediately before first distribution point 3, the cable 5 can, at a junction point 7, be divided in a number of individual cables. Then, the cable 5 is e.g. divided in a number of cables corresponding to the number of second distribution points 4 connected to said first distribution point 3. If a number of second distribution points 4 are in fact connected in cascade on account of the mutual arrangement, the number of individual cables into which said cable 5 is divided can be accordingly smaller.

At the same time an empty protective tube 8 intended for receiving glass fibre cable is laid between the exchange 1 and first distribution points 3. If necessary, the protective tubes 8 can be coupled with a coupling sleeve 9 immediately before the number exchange 1 so that finally one protective tube or a limited number of protective tubes for the glass fibre cables enter the exchange 1.

In said first distribution points 3, glass fibre connecting fields 10 are provided in which finally, through router units not further indicated in the drawing, said glass fibre strands coming from the number exchange 1 are coupled to the individual glass fibre strands of each individual end-user.

From said first distribution points 3, cables 11 having copper wires are laid to the individual second distribution points 4. If said second distribution points 4 are in direct alignment, it is also possible to lay a cable 11 having a multitude of copper wires and, as indicated in the drawing, to split it up into a further cable 11' for the consecutive second distribution point 4. The cables 11, 11' are provided in protective tubes not further indicated in the drawing.

Further, protective tubes 12 are laid from said first distribution points 3 to each of said second distribution points 4. Conduits not further indicated, into which the glass fibre strands will finally be installed, are provided in the protective tubes 12.

In said second distribution points 4, the copper wires of cable 11 are divided in groups, which in the given example means two groups. From said second distribution points 4, protective tubes 13, 14 will be installed, with conduits for both copper wires and glass fibre strands being provided in each of the protective tubes 13, 14. In a second distribution point 4, the copper wires of an incoming cable 11 are divided and in a junction box they are connected to the copper wires which are provided in the conduits in each of said protective tubes 13, 14.

Further, in the example given, in said second distribution point 4 the conduits for glass fibre strands in protective tube 12 are divided in two groups and are coupled to the conduits for glass fibre strands which are to be provided within the protective tubes 13, 14.

Within said protective tubes 13, 14, a coupling 15 for each end-user is provided on locations suitable for the purpose. From said coupling 15 a further protective tube 16 leads to a connecting point 17 at the end-user. A conduit for copper wires and a conduit for said glass fibre strands have been provided in said protective tube 16.

When setting up the network the first distribution points 3 are positioned, which are substantially small prefab buildings on the ground, measuring e.g. approximately 2,7 x 2,7 x 2,7 m. The incoming cable 5 and the protective tube 8 from the exchange and the outgoing cable 11 having copper wires and the protective tube 12 for the conduits for said glass fibre strands can be provided next. The cable 11 is is blown into the protective tube concerned as well as the conduits for the glass fibre strands. Blowing is understood to mean leading a cable or conduit under pressure through said protective tube or conduit, in which the cable or conduit could additionally be pushed by an inserting device.

From said second distribution points 4, which are preferably subterranean distribution points, outgoing protective tubes 13, 14 are laid. Conduits for copper wires and glass fibre strands are blown or drawn into these protective tubes 13, 14. Then, the protective tubes 16 can be provided and the associated conduits can be blown or drawn into them. The protective tubes 16 and the associated conduits are subsequently coupled to the protective tubes 13, 14 and the conduits provided therein.

The cable 5 from the exchange 1 can comprise e.g. 900 pairs of copper wires, which in junction point 7 is divided in 9 cables each having 100 pairs of copper wires. A further division takes place in said first distribution points 3 in which a cable having 100 pairs is divided in 4 x 25 pairs of copper wires. A cable having 25 pairs is then blown to each connected second distribution point 4. The protective tube is preferably a HDPE tube having a diameter of 40 mm. From a second distribution point 4, one or more pairs can be blown immediately to an end-users through said conduits within the protective tubes 13, 14.

Said protective tubes 13, 14 have a diameter of 50 mm in which 12 conduits for the pairs of copper wires have been provided having a diameter of 7 mm and 12 conduits for the glass fibre strands each having a diameter of 4 mm. The 24 conduits are blown into said protective tubes 13, 14 in one go as a bundle. From the second distribution points in said conduits for the copper wires, preferably 2 pairs of copper wires are provided, in which one pair of cores is meant to provide for a possible additional connection at the end-user.

The protective tube 12 for the glass fibre strands of first distribution point 3 to second distribution point 4 preferably has a diameter of 40 mm. 24 conduits each having a diameter of 4 mm are blown in a bundle into said protective tube 12 in one go. The way in which the incoming protective tube 8 will be provided with glass fibre cable is custom work, in which many options are possible.

With a cable 5 having 900 pairs of copper wires which is divided in 25 pairs per second distribution point 4, a star-shaped network having 36 second distribution points 4 around a first distribution point 3. A number of 20 connections on average and 22 at the most is maintained for the purpose of providing sufficient expansion capacity. For a first distribution point 3, this means an average number of 720 and a maximum of 792 connections. Here, the distances from a first distribution point 3 up to the end-users are usually within a 500 m radius, as a result of which interference-free transmission of signals through glass fibre strands can be guaranteed for high transmission speeds as well.

## Claims

1. Telecommunication network or part of a telecommunication network having a basic structure with copper wires extending from a distribution exchange to the end-users associated with said distribution exchange, **characterized in that** in addition to the basic structure having copper wires, a secondary structure for glass fibre strands is provided, said secondary structure being designed in such a way, that the glass fibre strands for each end-user can be installed in the secondary structure from the distribution exchange or a further point of distribution between distribution exchange and end-user.

2. Telecommunication network according to claim 1, **characterized in that** the secondary structure substantially comprises a protective tubing structure having successive protective tubing groups, with conduits for the glass fibre strands being applied within the protective tubes and individual conduits extending through one or more of the successive protective tubing groups up to the end-user.

3. Telecommunication network according to claims 1-2, in which the copper wires have been provided in conduits across at least part of the network, **characterized in that** first and second distribution points are provided between distribution exchange and end-user, with cables having copper wires and/or copper wires in conduits being provided in separate protective tubing groups and conduits for glass fibre strands also being provided in separate protective tubing groups being provided between first and second distribution points, and that from the second distribution points, conduits for copper wires and conduits for glass fibre strands combined in predetermined numbers are provided in protective tubes of a further protective tubing group.

4. Telecommunication network according to claim 1, **characterized in that** at least one conduit for copper wires and at least one conduit for glass fibre strands has been branched off from the further protective tubing group extending from a second distribution point to the individual end-users.

5. Telecommunication network according to claims 1-4, **characterized in that** said first distribution points are arranged for coupling glass fibre strands coming from the exchange to glass fibre strands going to the individual end-users.

6. Telecommunication network according to claim 5, **characterized in that** first distribution points are provided with router units for coupling glass fibre strands from the exchange to glass fibre strands to the individual end-users.

7. Telecommunication network according to claims 1-6, **characterized in that** first distribution points are arranged for splitting up the copper cable from the exchange into individual copper cables and/or copper wires to said second distribution points.

8. Telecommunication network according to claim 7, **characterized in that** the second distribution points are arranged for coupling the copper wires coming from said first distribution points to the copper wires going to the end-users.

9. Telecommunication network according to claims 1-8, **characterized in that** first distribution points are provided in a star net in relation to the exchange and second distribution points are provided in a star net in relation to first distribution points.

10. Telecommunication network according to claim 9, **characterized in that** first distribution points are substantially provided in a building on the ground and the second distribution points are provided under ground.

11. Method for establishing a telecommunication network according to claims 1-10, **characterized in that** it comprises the following steps among other things:
- determining locations for first distribution points and installing first distribution points;
- determining locations for second distribution points and installing second distribution points;
- at the same time installing protective tubing groups for copper wires and glass fibre strands; and
- laying copper cables and pairs of wires.

12. Method according to claim 11, **characterized in that** it comprises the following additional steps:
- laying copper cables and first protective tubes intended for providing glass fibre strands therein, from an exchange to said first distribution points;
- laying protective tubes for cable with copper wires and protective tubes for glass fibre strands from said first distribution points to said second distribution points;
- providing conduits within the protective tubes for said glass fibre strands;
- laying protective tubes for combinations of copper wires and glass fibre strands from said second distribution points;
- providing conduits for the combinations of copper wires and glass fibre strands in said conduits;
- providing copper wires in the conduits concerned and coupling them to the copper wires ending at said second distribution point;
- coupling conduits for glass fibre strands to the conduits extending to said first distribution points; and
- providing branches in the protective tubes coming from said second distribution points extending to the end-users, in which each branch has at least one conduit having two or more copper wires and one conduit arranged for providing glass fibre strands therein.

13. Method according to claims 11-12, **characterized in that** the conduits are blown into said protective tubes in bundles.

14. Method according to claims 11-13, **characterized in that** the conduits, each having a specific diameter, are employed for the copper wires and glass fibre strands, in which said conduits are brought collectively from said second distribution points into said protective tubes in bundles.

15. Method according to claim 14, **characterized in that** the copper wires are blown into said conduits from second distribution points.

16. Method according to claims 11-15, **characterized in that** in the long run one or more glass fibre strands or pairs of cores per individual end-user are blown from a first distribution point through the conduit concerned to a connecting point at the end-user.
